# EUROPEAN PATENT APPLICATION

(11) **EP 4 841 821 A1**
(43) Date of publication of application: **18.11.2026**
(21) Application number: 25869179.9
(22) Date of filing: 12.08.2025
(51) Int. Cl.: H01M 50/645, H01M 50/186, H01M 50/184, H01M 10/04, H01M 10/058, H01M 50/249

(54) **BATTERY CELL, MANUFACTURING METHOD OF SAME, AND BATTERY PACK AND VEHICLE INCLUDING SAME**

(30) Priority: 19.09.2024 KR 20240126928
(71) Applicant: LG Energy Solution, Ltd., Seoul 07335 (KR)
(72) Inventor: JEONG, Seok-Hun, Daejeon 34122 (KR); KIM, Jae-Hong, Daejeon 34122 (KR); KIM, Chun-Gon, Daejeon 34122 (KR)
(74) Representative: Goddar, Heinz J.
(86) International application number: PCT/KR2025/012237
(87) International publication number: WO 2026/063637

(57) **Abstract**

The present disclosure may include an electrode assembly configured by winding a first electrode, a second electrode, and a separator interposed therebetween around a winding axis, a battery housing configured to accommodate the electrode assembly through an open end formed on one side, a cap configured to cover the open end and having an injection hole formed in a center, an injection hole cap configured to be inserted into the injection hole to seal the injection hole, and a gasket interposed between the injection hole cap and the cap and having at least three sides in contact with an injection hole periphery surrounding the injection hole of the cap.

## Description

### TECHNICAL FIELD

The present disclosure relates to a battery cell, a method for manufacturing the battery cell, and a battery pack and vehicle including the battery cell.

This application is based on and claims priority from Korean Patent Application No. 10-2024-0126928, filed on September 19, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

There is a growing demand for metal can-type battery cells used in vehicle battery packs. Metal cans may be square or cylindrical. Cylindrical battery cells have a structure in which a jelly-roll-shaped electrode assembly is accommodated within a cylindrical can, offering greater impact and temperature resistance than pouch-type battery cells.

The process for manufacturing the cylindrical can-type battery cell may include producing a can by deep-drawing a metal sheet to form a circular bottom (closed surface) and a side wall formed in the shape of a cylindrical tube connected to the circular bottom, storing an electrode assembly within the can, and covering the open end of the can with a cap for sealing. The sealing may be performed using seam-welding, beading, and crimping methods.

Meanwhile, battery cells including this beading and crimping structure have a problem with increased dead space along the winding axis within the battery, resulting in lower energy density.

Seam welding is performed by aligning the leading edge of the side wall of a battery housing with the edge of the cap to abut each other and welding them. Since the fixing structure is simple in the seam welding, a larger volume of electrode assembly can be accommodated within the battery housing. Therefore, seam welding is advantageous for securing greater electrical capacity for the same volume of the battery housing. However, welding is difficult after injecting the electrolyte, so an injection hole must be formed in the cap. As a result, the electrolyte is injected after the seam welding, and the injection hole is then sealed with a sealing member.

Specifically, seam-welding the circumference of the open end of the battery housing and the cap for fixation may involve preparing a battery housing with an injection hole formed at the bottom or a cap with an injection hole, storing the electrode assembly within the battery housing, seam-welding the battery housing and cap, injecting the electrolyte through the injection hole formed in the cap or the bottom of the battery housing, and sealing the injection hole after the electrolyte injection. The sealing may be performed by seam welding or ball welding.

For ball welding, welding (e.g., laser welding) may be performed after a ball is pressed into place. However, the weld between the ball and cap is not performed by typical butt welding because there is a gap between them, which may reduce adhesion and easily cause cracks. When such microcracks are generated, a sealed structure cannot be achieved. In addition, during the battery usability process, a voltage drop may occur, potentially leading to defective cells. In addition, a thin cap may prevent sufficient pressure to be applied to press the ball into place, potentially increasing the risk of electrolyte leakage. In addition, electrolyte may remain around the injection hole, affecting weldability. In addition, during laser welding, porosity may form in the weld area depending on the keyhole maintenance and the weld surface condition, which may lead to leakage.

Therefore, in order to improve repeatability and reproducibility, it is necessary to form a sealed structure for the injection hole through mechanical joining rather than welding.

### DISCLOSURE

### Technical Problem

The present disclosure is designed to solve the problems of the related art, and therefore the present disclosure is directed to providing a battery cell with an improved sealing structure for the injection hole, and a method for manufacturing the battery cell.

The present disclosure is also directed to providing an injection hole sealing structure that minimizes crack formation during the sealing process of the injection hole and prevents electrolyte leakage, thereby enhancing repeatability and reproducibility, and method for manufacturing the same.

In addition, the present disclosure aims to increase energy density by eliminating the beading and crimping structure from the battery cell.

The present disclosure is also directed to providing a vehicle including such a battery cell.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell that may include an electrode assembly configured by winding a first electrode, a second electrode, and a separator interposed therebetween around a winding axis, a battery housing configured to accommodate the electrode assembly through an open end formed on one side, a cap configured to cover the open end and having an injection hole formed in a center, an injection hole cap configured to be inserted into the injection hole to seal the injection hole, and a gasket interposed between the injection hole cap and the cap and having at least three sides in contact with an injection hole periphery surrounding the injection hole of the cap.

The injection hole cap may be configured as a blind rivet.

The injection hole cap may include a body inserted into the injection hole, a flange configured to cover the injection hole at an upper side of the cap and extending outward from an upper end of the body in a radial direction perpendicular to a winding axis direction, and a plastic deformation portion having at least a portion extending outward from a lower end of the body in the radial direction.

The diameter of the flange may be greater than the inner diameter of the injection hole.

The maximum diameter of the plastic deformation portion may be greater than the inner diameter of the injection hole.

At least a portion of the plastic deformation portion may include a horizontal plane substantially parallel to the lower surface of the cap.

The injection hole cap may have a mandrel hole formed to extend from an upper surface of the injection hole cap in the winding axis direction.

The injection hole cap may further include a mandrel head positioned within the injection hole cap.

The injection hole cap may include a material having elongation.

The gasket may be configured to seal a gap between the cap and the injection hole cap at upper and lower sides of the cap.

The gasket may have the shape of a ring surrounding the injection hole periphery.

The gasket may have a "⊏"-shaped cross-section, based on the winding axis, taken along the winding axis direction.

The gasket may include a first part interposed between the body and the inner surface of the cap, a second part extending vertically from the first part and interposed between the flange and the upper surface of the cap, and a third part extending vertically from the first part and interposed between the plastic deformation portion and the lower surface of the cap.

The diameter of the second part may be greater than the diameter of the flange of the injection hole cap.

The diameter of the third part may be greater than the diameter of the plastic deformation portion of the injection hole cap.

In another aspect of the present disclosure, there is provided a method for manufacturing a battery cell, which may include a first step of inserting an electrode assembly, configured by winding a first electrode, a second electrode, and a separator interposed therebetween around a winding axis, through an open end of a battery housing, a second step of covering the open end of the battery housing with a cap, a third step of inserting an injection hole cap preform into an injection hole formed in the cap, a fourth step of inserting a gasket preform between the injection hole cap preform and the cap, and a fifth step of connecting a riveting gun to a mandrel inserted into the injection hole cap preform and pulling the riveting gun upward to seal the injection hole.

When the riveting gun is pulled upward, the injection hole cap preform and the gasket preform may be plastically deformed.

A mandrel hole extending in the winding axis direction may be formed in the injection hole cap preform, and the mandrel may be configured to be inserted into the mandrel hole.

The mandrel may include a mandrel pin having at least a portion protruding outside the injection hole cap preform, a mandrel head extending from a lower end of the mandrel pin further outward than the mandrel pin in the radial direction, and a weak portion positioned between the mandrel pin and the mandrel head.

The mandrel hole may include a first region having an inner diameter of a first length, and a second region positioned below the first region and having an inner diameter of a second length greater than the first length.

The diameter of the mandrel head is greater than the first length.

When the mandrel is pulled upward, the length of the injection hole cap preform in the winding axis direction may be reduced, and the maximum diameter of the injection hole cap preform may increase beyond the inner diameter of the injection hole. The gasket preform may have a " 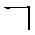 "-shaped cross-section taken along the winding axis direction.

The gasket preform may include a horizontal part positioned on the cap, and a vertical part extending in the winding axis direction and having at least a portion interposed between the injection hole cap preform and the inner surface of the cap.

When the mandrel is pulled upward, the vertical part may be bent radially outward.

When the mandrel is pulled upward, the mandrel pin and the mandrel head are separated from the weak portion when a force of a certain level or higher is applied.

The method may further include a step of injecting electrolyte through the injection hole between the second step and the third step, a pre-charge step of partially charging the battery cell to activate it, an activation step of charging the battery cell to a higher voltage, and a degassing step of removing gases generated inside the battery cell.

In another aspect of the present disclosure, there is provided a battery pack including at least one battery cell according to the present disclosure.

In another aspect of the present disclosure, there is provided a vehicle including at least one battery cell according to the present disclosure.

### Advantageous Effects

According to one aspect of the present disclosure, the injection hole can be sealed through mechanical coupling, such as riveting, using an injection hole cap configured as a blind rivet, thereby improving the injection hole sealing structure without the need for welding.

In addition, according to another aspect of the present disclosure, a gasket is provided between the injection hole cap and the cap to prevent electrolyte leakage and electrically insulate them from each other.

In addition, according to another aspect of the present disclosure, the gasket has a "⊏"-shaped cross-section and provides a double sealing structure between the cap and the injection hole cap at the upper and lower sides of the cap, thereby further strengthening the sealing structure in the battery housing and more reliably preventing electrolyte leakage.

In addition, according to another aspect of the present disclosure, by eliminating the beading and crimping structure from the battery cell, energy density can be increased.

In addition, according to another aspect of the present disclosure, the injection hole can be sealed after degassing following the activation process, thereby preventing unexploded gas from increasing the internal pressure of the battery cell and causing safety issues.

In addition, according to another aspect of the present disclosure, events resulting from thermal runaway in a vehicle including multiple battery packs, such as fire or explosion, can be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating the exterior of a battery cell according to an embodiment of the present disclosure.
FIG. 2 is an exploded perspective view of the battery cell in FIG. 1 according to an embodiment of the present disclosure.
FIG. 3 is a cross-sectional view of the battery cell taken along line A-A' in FIG. 1 according to an embodiment of the present disclosure.
FIG. 4 is a cross-sectional perspective view of the battery cell taken along line A-A' in FIG. 1.
FIG. 5 is an enlarged view of part A in FIG. 4.
FIG. 6 is a cross-sectional view of a cap, an injection hole cap, and a gasket according to an embodiment of the present disclosure.
FIG. 7 is an exploded cross-sectional view illustrating a cap, an injection hole cap, and a gasket according to an embodiment of the present disclosure.
FIG. 8 is a drawing illustrating an injection hole cap preform and a gasket preform before riveting according to an embodiment of the present disclosure.
FIG. 9 is an exploded cross-sectional view illustrating an injection hole cap preform and a gasket preform before riveting according to an embodiment of the present disclosure.
FIG. 10 is a drawing illustrating a battery pack according to an embodiment of the present disclosure.
FIG. 11 is a drawing illustrating a vehicle including the battery pack in FIG. 10.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In addition, for purposes of better understanding the present disclosure, the accompanying drawings are not necessarily drawn to scale, and the dimensions of certain elements may be exaggerated for clarity. In addition, the same reference numerals may indicate the same elements across different embodiments.

Ordinal terms such as "first," "second," and the like may be used to describe various components, but the components are not limited by these terms. These terms are used solely to distinguish one component from another. Therefore, unless explicitly stated otherwise, a first component may be the same as a second component.

Throughout the specification, unless otherwise expressly stated, each component may be singular or plural.

Hereinafter, the configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'joined' to another element" should be understood that the two elements may be directly connected or joined to each other, and that another element may be "interposed" between the two elements, or that the two elements may be "connected," "coupled," or "joined" via another element.

A single element used herein should be construed to encompass a plurality of elements, unless stated otherwise. In this specification, the expression "one component comprises' or 'includes' elements or steps" should not be understood that the component must all of the elements or steps, and should be understood that the component may exclude some of the elements or steps and that the component may further include additional elements or steps.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position, arrangement, or rotation of the target object or the position of the observer.

For convenience of explanation, in this specification, the longitudinal direction of a winding axis of an electrode assembly wound in a jellyroll shape will be referred to as a "winding axis direction." In addition, the direction surrounding the winding axis will be referred to as a "circumferential direction." In addition, the direction approaching or moving away from the winding axis will be referred to as a "radial direction." In particular, the direction approaching the winding axis will be referred to as a "centripetal direction," and the direction moving away from the winding axis will be referred to as a "centrifugal direction."

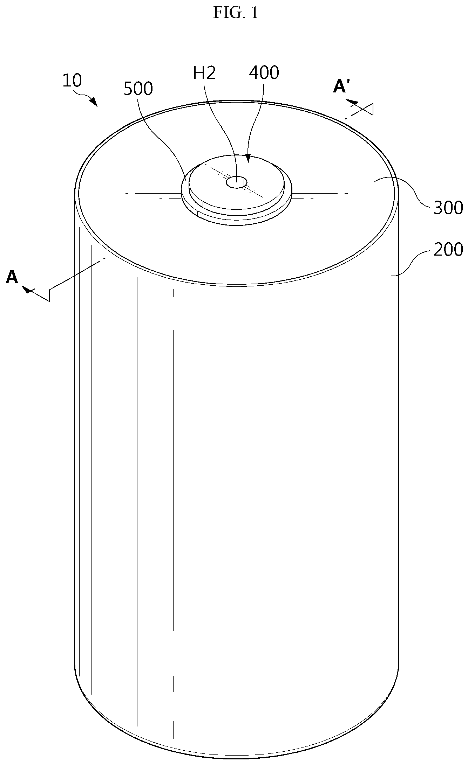

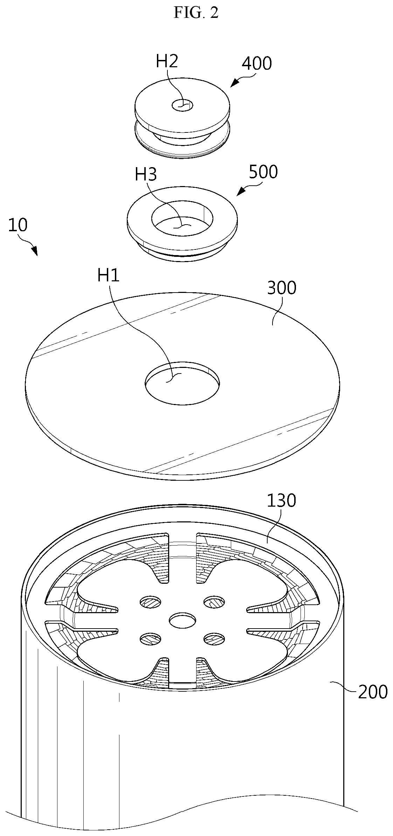

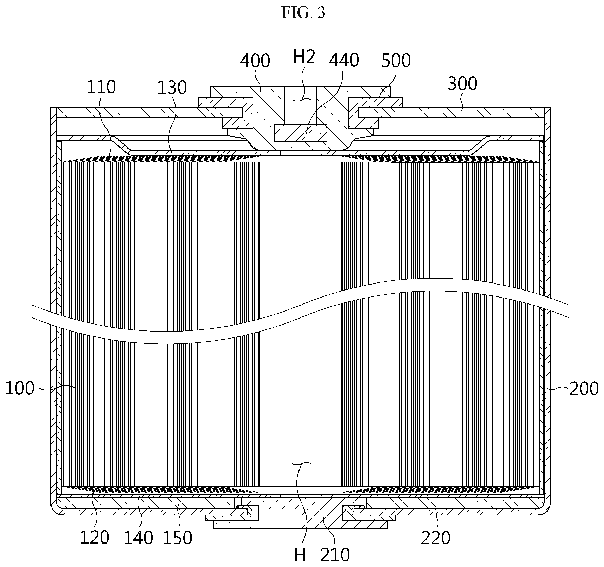

FIG. 1 is a perspective view illustrating the exterior of a battery cell 10 according to an embodiment of the present disclosure. FIG. 2 is an exploded perspective view of the battery cell in FIG. 1 according to an embodiment of the present disclosure. FIG. 3 is a cross-sectional view of the battery cell 10 taken along line A-A' in FIG. 1 according to an embodiment of the present disclosure.

Referring to FIGS. 1 to 3, a battery cell 10 according to an embodiment of the present disclosure may include an electrode assembly 100, a battery housing 200, a cap 300, an injection hole cap 400, and a gasket 500.

Referring to FIG. 3, the electrode assembly 100 may include a first uncoated portion 110 and a second uncoated portion 120. More specifically, the electrode assembly 100 may be in the form of a jelly-roll obtained by winding a first electrode and a second electrode with a separator interposed therebetween around a winding axis. Here, the first and second electrodes may be formed in the shape of a sheet. An additional separator may be provided on the outer circumferential surface of the electrode assembly 100 for insulation from the battery housing 200. The structure of the electrode assembly 100 is not limited to the embodiment and may have a winding structure well known in the art.

The first electrode may be a negative electrode plate, and the second electrode may be a positive electrode plate. The negative electrode plate may have a negative electrode active material applied to one or both surfaces, and a first uncoated portion 110 where the negative electrode active material is not applied may be formed at an end of the negative electrode plate. The first uncoated portion 110 may be exposed to the outside of the separator while forming a plurality of turns around the center of the electrode assembly 100, and may be used as an electrode tab itself. The positive electrode plate may have a positive electrode active material applied to one or both surfaces, and a second uncoated portion 120 where the positive electrode active material is not applied may be formed at an end of the positive electrode plate. The second uncoated portion 120 may be exposed to the outside of the separator while forming a plurality of turns around the center of the electrode assembly 100, and may be used as an electrode tab itself. That is, the positive electrode plate and the negative electrode plate may each include an uncoated portion where the active material is not applied at a longitudinal end in the winding direction. In addition, the first uncoated portion 110 and the second uncoated portion 120 may be configured to face opposite directions. The first uncoated portion 110 and the second uncoated portion 120 may be accommodated within the battery housing 200 such that the first uncoated portion 110 is positioned at one end and the second uncoated portion 120 is positioned at the other end, based on the winding axis direction. Here, any active materials known in the art may be used without limitation for the positive electrode active material coated on the positive electrode plate and the negative electrode active material coated on the negative electrode plate.

In addition, the separator may be configured as single or multiple porous polymer films made of, for example, a polyolefin-based polymer such as an ethylene homopolymer, a propylene homopolymer, an ethylene/butene copolymer, an ethylene/hexene copolymer, or an ethylene/methacrylate copolymer. As another example, the separator may be a conventional porous nonwoven fabric, such as a nonwoven fabric made of high-melting-point glass fibers or polyethylene terephthalate fibers.

At least one surface of the separator may include a coating layer of inorganic particles. Furthermore, the separator itself may be formed of a coating layer of inorganic particles. The particles constituting the coating layer may have a structure in which they are bound with a binder such that an interstitial volume exists between adjacent particles.

For example, notches may be formed at a predetermined interval in the first uncoated portion 110 and the second uncoated portion 120, forming flag-shaped notched tabs. In a jelly-roll-shaped electrode assembly 100, the notched tabs may be radially bent and flattened. The notched tabs may be bent radially inward or outward. The notched tabs may be individually bent during the process of winding the laminate to form a jelly-roll-shaped electrode assembly 100. Alternatively, the notched tabs may be bent all at once after the laminate is wound to form a jelly-roll-shaped electrode assembly 100. The notched tabs of the first uncoated portion 110 and the notched tabs of the second uncoated portion 120, which are bent and overlapped in the radial direction, may provide planes, which are substantially perpendicular to the axial direction, at both axial ends of the electrode assembly 100.

Referring to FIGS. 1 to 3, the battery housing 200 may be configured to accommodate the electrode assembly 100. The battery housing 200 may have an open end formed on one side. The battery housing 200 may generally be a cylindrical container with an open end formed on one side. For example, the electrode assembly 100 may be accommodated within the battery housing 200 such that the first uncoated portion 110 faces the open end. Specifically, the battery housing 200 may include a side wall, a bottom portion connected to one axial end of the side wall, and an open end provided at the other axial end of the side wall. The side wall and bottom portion of the battery housing 200 may be formed integrally. The bottom portion may have a generally flat shape. The side wall may be cylindrical, connected to the bottom portion, and extend in the axial direction. The portion of the side wall that is not connected to the bottom portion may be defined as the open end of the battery housing 200. In FIGS. 1 to 3, the bottom portion is illustrated as being positioned at the bottom of the battery housing 200, and the open end is illustrated as being positioned at the top of the battery housing 200. The open end may be formed in the portion facing the bottom portion of the battery housing 200. Accordingly, the electrode assembly 100 may be accommodated through the open end formed in the battery housing 200.

The side wall of the battery housing 200 may be configured in the shape of a cylinder with a constant radius. Preferably, the entirety of the side wall of the battery housing 200 may be configured in the shape of a cylinder with a constant radius.

According to an embodiment, the bottom portion may form a closed side of the battery housing 200, a through-hole may be formed in the bottom portion, and the electrode terminal 210 may pass through the through-hole.

Conventional battery housings 200 further include a beading portion formed at an end adjacent to the open end and a crimping portion formed on the beading portion. However, the battery housing 200 of the present disclosure may not have a beading and crimping structure formed on the side wall. That is, the side wall of the battery housing 200 of the present disclosure may not be recessed inward. That is, the battery housing 200 of the present disclosure may be configured to have a constant radius across the entire area of the side wall.

With this structure, by excluding the beading and crimping structure from the cylindrical battery cell 10, various process errors that may arise due to the beading and crimping structure may be prevented. In addition, the process may be simplified by eliminating the beading and crimping processes. In addition, the elimination of the beading and crimping structure may prevent an increase in the dead space within the battery in the winding axis direction of the electrode assembly 100 and reduced energy density. Therefore, the battery cell 10 according to the present disclosure may increase the internal capacity for the same external dimensions, compared to a battery cell produce by the beading and crimping method. That is, the structure according to the present disclosure may improve the energy density of the battery cell 10.

The battery housing 200 may include a conductive metal material. The material of the battery housing 200 may include a conductive metal, such as aluminum, steel, or stainless steel. For example, the bottom portion and side wall may be manufactured by forming a nickel-plated steel sheet using a deep drawing process, and then trimming the end of the side wall with a punch while holding it with a blank holder. However, the material and manufacturing method of the battery housing 200 are not limited thereto.

The battery housing 200 may be electrically connected to the first uncoated portion 110 of the electrode assembly 100. Therefore, the battery housing 200 may have a first polarity.

Referring to FIGS. 1 to 3, the cap 300 may be configured to cover the open end formed on one side of the battery housing 200. The cap 300 may be configured to have, for example, a roughly plate shape. The cap 300 may be coupled to the open end of the battery housing 200. For example, the cap 300 may be positioned on the upper edge of the open end of the battery housing 200. Alternatively, for example, as shown in FIG. 3, the cap 300 may contact the inner surface of the upper edge of the open end of the battery housing 200.

The contact point between the open end of the battery housing 200 and the cap 300 may be joined. For example, the joint between the open end of the battery housing 200 and the cap 300 may be performed by welding. For example, the cap 300 may be coupled to the battery housing 200 using butt welding. Therefore, the battery cell 10 may have a larger internal capacity for the same external dimensions than a battery cell produced by the beading and crimping method. As a result, the energy density of the battery cell 10 may be increased. However, the battery housing 200 and the cap 300 may be coupled by a method other than welding, and the coupling method is not limited thereto. The joint between the battery housing 200 and the cap 300 may further ensure sealing of the battery cell 10.

The cap 300 may be made of a metal material. Therefore, the cap 300 may be electrically conductive. For example, the cap 300 may include a material of aluminum. The cap 300 may be electrically connected to the battery housing 200. Since the battery housing 200 is also configured as a conductive metal, the cap 300 coupled to the battery housing 200 may have the same polarity as the battery housing 200. For example, the cap 300 may be configured to have the first polarity.

The thickness of the cap 300 may be approximately 0.5 mm to 2 mm. For example, the thickness of the cap 300 may be approximately 1 mm.

The cap 300 may have an injection hole H1 formed in at least a portion thereof. The injection hole H1 may be formed in the center of the cap 300. In this case, the injection hole H1 may be blocked by an injection hole cap 400, which will be described later. For example, the injection hole cap 400 may be press-fitted into the injection hole H1. By blocking the injection hole H1 with the injection hole cap 400, sealing of the battery cell 10 may be guaranteed.

The injection hole H1 may serve as, for example, an electrolyte injection port. The center of the injection hole H1 may coincide with the center of the winding center hole H of the electrode assembly 100. That is, the injection hole H1 of the cap 300 may be positioned above the winding center hole H of the electrode assembly 100 in the winding axis direction.

The diameter of the injection hole H1 may be smaller than the diameter of the winding center hole H of the electrode assembly 100. According to this structure, when the injection hole cap 400 is force-pressed into the injection hole H1, the injection hole cap 400 may move downward. In this case, the electrode assembly 100 or a first current collector 130 coupled to the electrode assembly 100 is not damaged by the downwardly moved injection hole cap 400. That is, even if the injection hole cap 400 is pressed downward, since the injection hole cap 400 may enter the winding center hole H of the electrode assembly 100, it may not affect the bending surface or electrode tab of the electrode assembly 100.

Meanwhile, the injection hole H1 may be configured to discharge gas generated during the pre-charge process to be described below. That is, after a degassing process of exhausting all gases generated during the pre-charge process through the injection hole H1, the injection hole cap 400 may be coupled to the injection hole H1. As a result, swelling of the battery cell 10 may be reduced.

Referring to FIGS. 1 to 3, the injection hole cap 400 may be configured to seal the injection hole H1. That is, the injection hole cap 400 may be configured to be inserted into the injection hole H1. The injection hole cap 400 may pass through the injection hole H1. By inserting the injection hole cap 400 into the injection hole H1 of the cap 300, the sealing of the battery cell 10 may be secured. The injection hole cap 400 may pass through the injection hole H1 formed in the cap 300 to seal both the outside and inside of the battery housing 200, thereby preventing electrolyte leakage.

This structure simplifies the process by eliminating the beading and crimping processes. In addition, the structure may prevent an increase in the dead space within the battery in the winding axis direction of the electrode assembly 100 and reduced energy density. That is, the structure according to the present disclosure may improve the energy density of the battery cell 10.

The injection hole cap 400 may be configured as a blind rivet. That is, the injection hole cap 400 may be coupled to the cap 300 by riveting using a blind rivet. The injection hole cap 400 may be riveted to the cap 300.

Conventionally, a ball is press-fitted and welded to seal the injection hole H1. The weld between the ball and cap is not performed by typical butt welding because there is a gap between them, which may easily cause cracks between the ball and the cap 300. When such cracks are generated, a voltage drop may occur during the battery usability process, potentially leading to defective cells. In addition, considering the thickness of the cap 300, there is a limit to the pressing force on the ball, so the electrolyte may easily leak.

According to the above-implemented configuration of the present disclosure, since the injection hole cap 400 is configured as a blind rivet, it is possible to improve sealing strength and prevent electrolyte leakage. In addition, the sealing step may be performed repeatedly using a mechanical joint such as riveting, thereby increasing the repeatability and reproducibility of the sealing step.

The battery cell 10 may further include a first current collector 130 configured to be electrically connected to the first electrode and a second current collector 140 configured to be electrically connected to the second electrode. The first current collector 130 and the second current collector 140 may be respectively joined to substantially flat surfaces formed by bending notched tabs exposed at both ends of the electrode assembly 100 in the winding axis direction. The joining may be accomplished using resistance welding, ultrasonic welding, or laser welding.

The battery housing 200 may be electrically connected to the first current collector 130. The electrode terminal may be electrically connected to the second current collector 140. Accordingly, the battery housing 200 may have the first polarity, and the electrode terminal 210 may have the second polarity. That is, the electrode terminal 210 may refer to an electrode terminal 210 having the second polarity. In particular, both the bottom portion of the battery housing 200 and the side wall connected thereto may have the first polarity. Accordingly, both the first and second polarities may be formed at the bottom portion of the battery housing 200. As a result, both the busbar connected to the electrode terminal 220 having the first polarity and the busbar connected to the electrode terminal 210 having the second polarity may be positioned at one end of the battery housing 200 in the winding axis direction. In one example, the electrode terminal 220 with the first polarity may be a negative electrode terminal, and the electrode terminal 210 with the second polarity may be a positive electrode terminal, or vice versa. Therefore, the battery cell 10 according to the present disclosure may simplify the electrical connection structure by connecting both the positive and negative electrodes from one direction when electrically connecting a plurality of battery cells 10. In addition, the battery cell 10 according to the present disclosure has a structure in which most of the bottom portion of the battery housing 200 may be utilized as the electrode terminal 220 with the first polarity, thereby providing the advantage of securing the sufficient area for welding components for electrical connection.

The battery cell 10 may further include an insulator 150. The insulator 150 may be provided between the second current collector 140 and the inner surface of the bottom portion. The insulator 150 prevents contact between the second current collector 140 and the battery housing 200. The insulator 150 may also be interposed between the inner surface of the side wall and the electrode assembly 100. That is, the insulator 150 may also be interposed between the second uncoated portion 120 and the battery housing 200. This is intended to prevent contact between the inner surface of the battery housing 200 and the second uncoated portion 120 extending toward the bottom portion of the battery housing 200.

Preferably, the battery cell 10 may be, for example, a cylindrical secondary battery having a form factor ratio (diameter-to-height ratio) greater than approximately 0.4. Preferably, the diameter of the battery cell 10 may be 40 mm to 50 mm, and the height may be 60 mm to 130 mm. The form factor of the battery cell 10 may be, for example, 46110, 4875, 48110, 4880, or 4680.

However, the shape of the battery cell 10 according to the present disclosure is not limited to the example described above and may be applied to batteries of other shapes. For example, the present disclosure may also be applied to prismatic batteries.

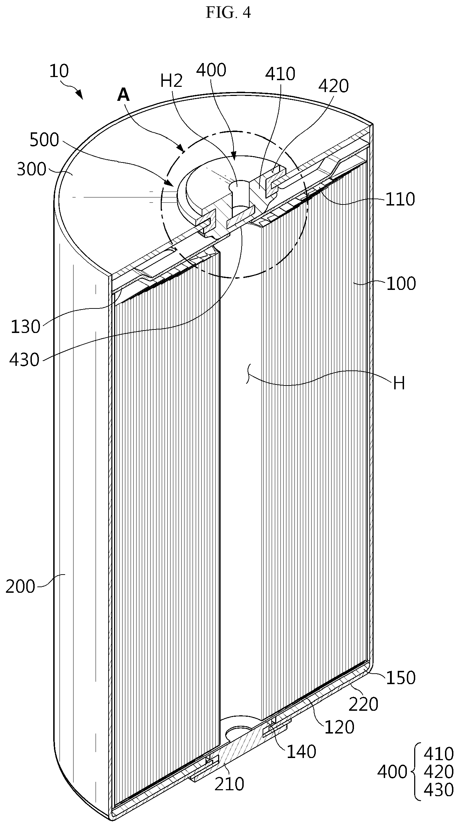

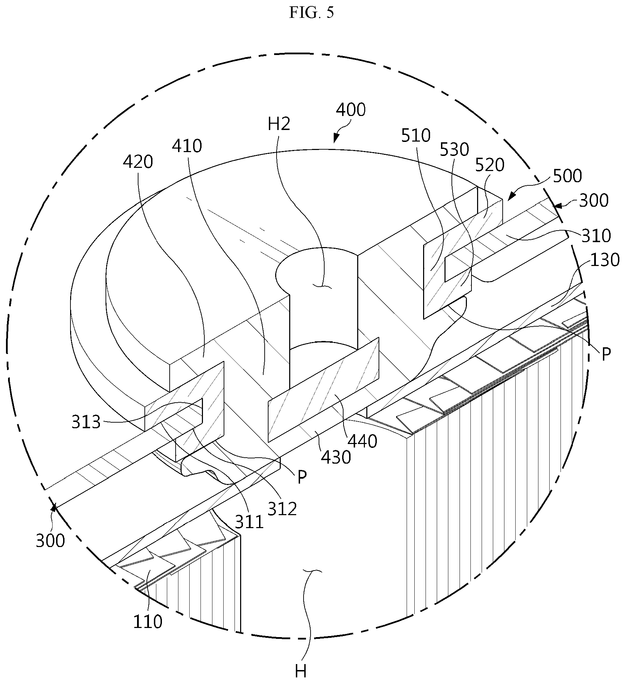

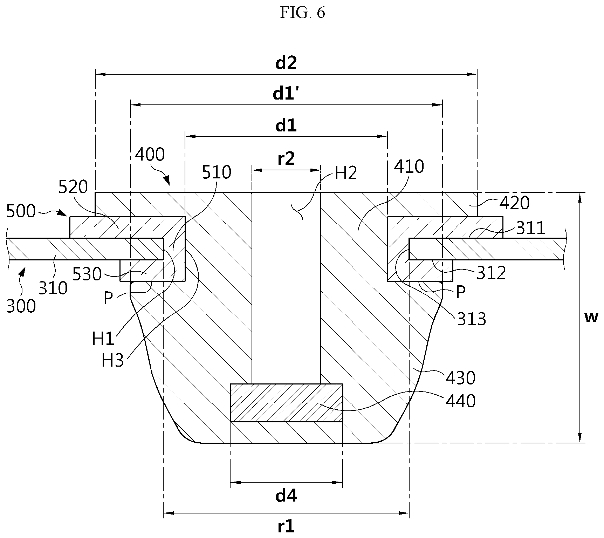

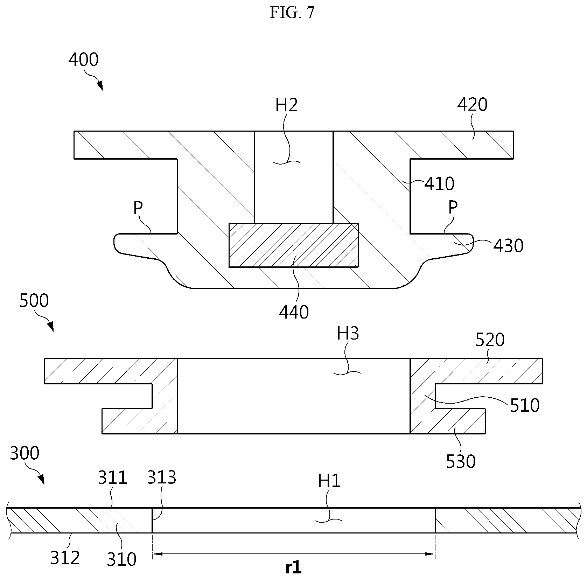

FIG. 4 is a cross-sectional perspective view of the battery cell taken along line A-A' in FIG. 1. FIG. 5 is an enlarged view of part A in FIG. 4. FIG. 6 is a cross-sectional view of a cap, an injection hole cap, and a gasket according to an embodiment of the present disclosure. FIG. 7 is an exploded cross-sectional view illustrating a cap, an injection hole cap, and a gasket according to an embodiment of the present disclosure.

The injection hole cap 400 may be configured to surround the injection hole periphery 310 of the cap 300 on at least three sides. The injection hole cap 400 may surround the upper surface 311, lower surface 312, and inner surface 313 of the injection hole periphery 310 of the cap 300. Accordingly, the sealing force may be improved.

A portion of the injection hole cap 400 may be inserted into the battery housing 200, and another portion may be exposed outside the battery housing 200. A portion of the injection hole cap 400 may be positioned above the cap 300, and another portion may be positioned below the cap 300, based on the winding axis direction.

The injection hole cap 400 may include a body 410 inserted into the injection hole H1, a flange 420 extending outward from the upper end of the body 410 in the radial direction perpendicular to the winding axis, and a plastic deformation portion 430 extending partially outward from the lower end of the body 410 in the radial direction.

The body 410 may be a part that extends in the axial direction so as to pass through the injection hole H1. The body 410 may pass through the battery housing 200. At least a portion of the body 410 may be positioned inside the battery housing 200. The lateral surface of the body 410 may be surrounded by the injection hole periphery 310 of the cap 300. The body 410 may have a cylindrical shape. The diameter d1 of the body 410 may be substantially similar to or smaller than the inner diameter r1 of the injection hole H1.

The flange 420 may cover the injection hole H1 on top of the cap 300. The flange 420 may be positioned outside the battery housing 200. The diameter d2 of the flange 420 may be greater than the diameter d1 of the body 410. The diameter d2 of the flange 420 may be greater than the inner diameter r1 of the injection hole H1. According to the above-implemented configuration of the present disclosure, even when external pressure is applied, the injection hole cap 400 may be fixed in position without falling into the winding center hole H of the electrode assembly 100, and may easily seal the injection hole H1.

According to an embodiment, the thickness of the flange 420 may be constant in the radial direction. For example, the flange 420 may include a flat surface. According to another embodiment, although not shown in the drawing, the flange 420 may be formed to have a thickness that increases radially inward. For example, a cross-section of the flange 420 taken along the winding axis direction may have a hemispherical shape. However, the shape of the flange 420 is not limited to the above embodiment and may be designed in various ways.

The plastic deformation portion 430 may be a part whose shape is deformed by external pressure through riveting. The plastic deformation portion 430 may be formed by plastic processing a part protruding inwardly from the cap 300. According to an embodiment, the thickness of the plastic deformation portion 430 may be constant in the radial direction. The lateral surface of the plastic deformation portion 430 may have an irregular shape. For example, the plastic deformation portion 430 may include a curved surface formed in the vertical direction.

The maximum diameter d1' of the plastic deformation portion 430 may be greater than the inner diameter r1 of the injection hole H1. According to the above-implemented configuration of the present disclosure, since both the diameter of the flange 420 positioned on the top of the cap 300 and the diameter of the plastic deformation portion 430 positioned at the bottom of the cap 300 are greater than the inner diameter r1 of the injection hole H1, the injection hole cap 400 may be fixed in position without moving upward or downward. Therefore, the injection hole H1 may be strongly sealed, thereby sealing both the inside and outside of the battery housing 200 and preventing electrolyte leakage.

According to an embodiment, at least a portion of the plastic deformation portion 430 may include a horizontal plane P substantially parallel to the lower surface of the cap 300. The horizontal plane P may extend from the lower end of the body 410 in the radial direction. The horizontal plane P may face the lower surface 312 of the cap 300. According to the above-implemented configuration of the present disclosure, the horizontal plane P of the plastic deformation portion 430 may be configured to face the cap 300, so that the cap 300 may be more closely attached to the plastic deformation portion 430 of the injection hole cap 400. Therefore, the sealing force of the injection hole cap 400 may be increased.

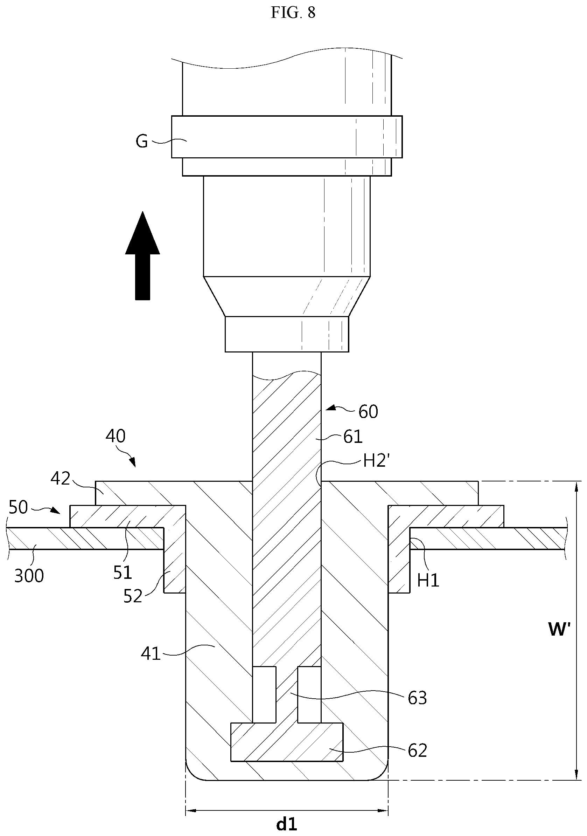

The injection hole cap 400 may be formed with a mandrel hole H2 extending from the upper surface of the injection hole cap 400 in the winding axis direction. The mandrel hole H2 may be formed to pass through the center of the injection hole cap 400. The mandrel hole H2 may pass through the center of the flange 420 and the body 410 of the injection hole cap 400. A portion of the mandrel hole H2 may be positioned on at least the upper portion of the plastic deformation portion 430 of the injection hole cap 400. The mandrel hole H2 may be a hole into or from which a mandrel (see 60 in FIG. 8), which will be described later, is inserted or removed. The inner diameter r2 of the mandrel hole H2 may be greater than the diameter of the mandrel 60. The upper portion of the mandrel hole H2 may be open, and the lower end of the mandrel hole H2 may be closed. The mandrel hole H2 may be closed at the plastic deformation portion 430 or the body 410. A mandrel piece 440, which will be described later, may be positioned at the lower portion of the mandrel hole H2.

The injection hole cap 400 may further include a mandrel piece 440 disposed within the injection hole cap 400. The mandrel piece 440 may be a portion of the mandrel 60 that is inserted into an injection hole cap preform (see 40 in FIG. 8) before the injection hole cap 400 is plastically deformed and secured to the cap 300. The mandrel piece 440 may have substantially the same configuration as a mandrel head (see 62 in FIG. 8) of the mandrel 60. During the riveting process of the injection hole cap preform 40, the mandrel 60 may be pulled upward by a riveting gun (see G in FIG. 8) connected thereto. In this case, when a force of a certain level or higher is applied, the mandrel head 62 and a mandrel pin (see 61 in FIG. 8), constituting the mandrel 60, may be separated. The mandrel head 62 separated and embedded within the injection hole cap 400 may be defined as the mandrel piece 440.

Referring to FIG. 6, the diameter d4 of the mandrel piece 440 may be greater than the inner diameter r2 of the mandrel hole H2. That is, the mandrel piece 440 may protrude further outward in the radial direction than the inner surface of the injection hole cap 400 surrounding the mandrel hole H2. According to the above-implemented configuration of the present disclosure, when the upward pulling force of the mandrel head 62 exceeds the yield point of the injection hole cap 400 material, at least a portion of the injection hole cap preform 40 may be plastically deformed.

The injection hole cap 400 may include metal such as aluminum or stainless steel (SUS). Since the injection hole cap 400 may be susceptible to corrosion from the electrolyte, it may include a corrosion-resistant material. The injection hole cap 400 may include a material having elongation. According to the above-implemented configuration of the present disclosure, when a force of a certain level or higher is applied to the injection hole cap preform 40, its shape may be deformed. Therefore, at least a portion of the injection hole cap preform 40 may be plastically deformed to seal the injection hole H1.

The process of sealing the injection hole H1 using the injection hole cap 400 will be described later.

Referring to FIGS. 1 to 3, the gasket 500 may be interposed between the injection hole cap 400 and the cap 300. That is, the injection hole cap 400 may be riveted to the cap 300 with the gasket 500 interposed therebetween. The gasket 500 is interposed between the injection hole cap 400 and the cap 300, thereby sealing both the inside and outside of the battery housing 200 to prevent electrolyte leakage and electrically insulating the injection hole cap 400 and the cap 300 from each other. The gasket 500 may be tightly fitted between the injection hole cap 400 and the cap 300.

The gasket 500 may have the shape of a ring surrounding the injection hole periphery 310. The gasket 500 may be inserted into the injection hole H1 so as to be in contact with the injection hole periphery 310 of the cap 300 in the circumferential direction. A gasket hole H3 may be formed at the center of the gasket 500. The injection hole cap 400 may be positioned to pass through the gasket hole H3. Therefore, it facilitates sealing of the injection hole H1 in the circumferential direction.

Referring back to FIG. 5, the gasket 500 may be in contact with the cap 300 on at least three sides. The gasket 500 may be in contact with the injection hole periphery 310 surrounding the injection hole H1 of the cap 300 on at least three sides. For example, the gasket 500 may be in contact with the upper surface 311, lower surface 312, and inner surface 313 of the cap 300. The gasket 500 may be configured to be in contact with the injection hole cap 400 on at least three sides. For example, the gasket 500 may be in contact with the lower surface of the flange 420 of the injection hole cap 400, the outer surface of the body 410, and the upper surface (e.g., the horizontal plane P) of the plastic deformation portion 430.

The gasket 500 may include a first part 510 extending in the winding axis direction, and a second part 520 and third part 530 vertically extending from the first part 510, respectively. The first part 510 may be interposed between the outer surface of the body 410 and the inner surface 313 of the cap 300. The second part 520 may extend outward from the upper end of the first part 510 in the radial direction. The second part 520 may be interposed between the lower surface of the flange 420 and the upper surface 311 of the cap 300. The third part 530 may extend outward from the lower end of the first part 510 in the radial direction. The third part 530 may be interposed between the upper surface of the plastic deformation portion 430 and the lower surface 312 of the cap 300. The third part 530 may be interposed between the horizontal plane P of the plastic deformation portion 430 and the lower surface 312 of the cap 300. The third part 530 may be disposed parallel to the second part 520. The third part 530, like the plastic deformation portion 430 of the injection hole cap 400, may be a part that is plastically deformed during the riveting process. The third part 530 may be a part that is pressured and deformed by the plastic deformation force of the injection hole cap 400 during the riveting process.

According to the above-implemented configuration of the present disclosure, the gasket 500 has three sides in direct contact with the injection hole cap 400 and the cap 300, resulting in a large contact area to improve sealing. As a result, the sealing performance of the battery housing 200 may be enhanced.

That is, the gasket 500 may have a "⊏"-shaped cross-section, based on the winding axis, taken along the winding axis direction. The gasket 500 may be configured to seal the gap between the cap 300 and the injection hole cap 400 at the upper and lower sides of the cap 300. That is, the gasket 500 may double-seal the gap between the cap 300 and the injection hole cap 400 at both sides along the winding axis. The second part 520 and third part 530 of the gasket 500 may double-seal the gap between the cap 300 and the injection hole cap 400 at the upper and lower sides of the cap 300. According to the above-implemented configuration of the present disclosure, the sealing of the battery housing 200 may be further strengthened, thereby more reliably preventing electrolyte leakage.

At least a portion of the second part 520 may be exposed to the outside of the flange 420 of the injection hole cap 400. That is, the second part 520 may be configured to protrude further outward than the flange 420 in the radial direction. For example, as illustrated in FIG. 6, the diameter of the second part 520 may be greater than the diameter d2 of the flange 420 of the injection hole cap 400. According to the above-implemented configuration of the present disclosure, electrolyte leakage may be prevented and sealing performance may be improved. Sealing may be easier. In addition, the cap 300 having a specific polarity (e.g., first polarity) and the injection hole cap 400 may be insulated from each other.

Similarly, at least a position of the third part 530 may be exposed outside the plastic deformation portion 530 of the injection hole cap 400. That is, the third part 530 may be configured to protrude further outward than the plastic deformation portion 430 in the radial direction. The diameter of the third part 530 may be greater than the diameter of the plastic deformation portion 430 of the injection hole cap 400. According to the above-described embodiment of the present disclosure, electrolyte leakage may be prevented and sealing performance may be improved. Sealing may be easier. In addition, the cap 300 having a specific polarity (e.g., first polarity) and the injection hole cap 400 may be insulated from each other.

The gasket 500 may have chemical resistance to the electrolyte. In addition, the gasket 500 may have heat resistance and electrical insulation properties. For example, the gasket may include at least one of polybutylene terephthalate (hereinafter referred to as "PBT"), polytetrafluoroethylene (PTFE), and perfluoroalkoxy (PFA), which have excellent chemical resistance, heat resistance, and insulation properties. Since the gasket has excellent chemical resistance, it is resistant to corrosion. In addition, since the gasket has excellent heat resistance, its physical properties may not significantly change even when exposed to high temperatures. According to an embodiment, the gasket 500 may include a PBT material. PBT is cost-effective compared to other materials and may be easily mass-produced and manufactured.

Using a PBT gasket 500, a He leak test was conducted at 70°C and 5 bar, which measured a He leak rate of 1.3×10⁻⁶ cc/sec and demonstrated excellent sealing performance that easily met the He leak test standards.

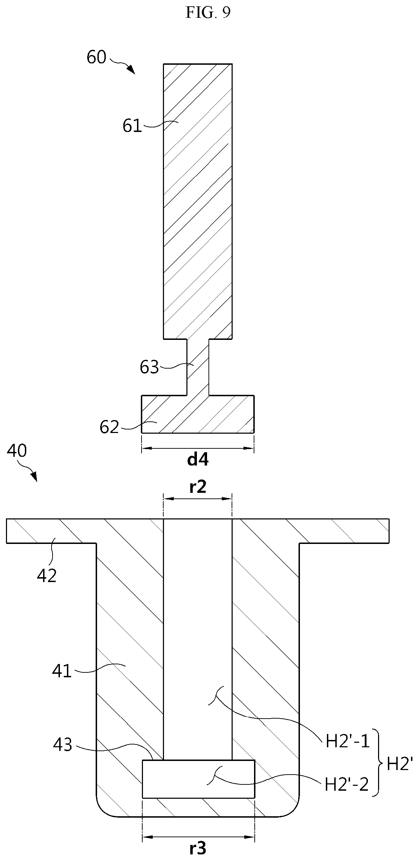

FIG. 8 is a drawing illustrating an injection hole cap preform and a gasket preform before riveting according to an embodiment of the present disclosure. FIG. 9 is an exploded cross-sectional view illustrating an injection hole cap preform and a gasket preform before riveting according to an embodiment of the present disclosure.

Hereinafter, a method for manufacturing the battery cell 10, which has been described with reference to FIGS. 1 to 7, will be described with reference to FIGS. 8 and 9.

A method for manufacturing a battery cell 10 may include a first step of inserting an electrode assembly through the open end of a battery housing, a second step of covering the open end of the battery housing with a cap, a third step of inserting an injection hole cap preform into an injection hole formed in the cap, a fourth step of inserting a gasket preform between the injection hole cap preform and the cap, and a fifth step of connecting a riveting gun to a mandrel inserted into the injection hole cap preform and pulling the riveting gun upward to seal the injection hole.

First, a battery housing 200 having an open end may be prepared, and the electrode assembly 100 may be assembled to the battery housing 200 through the open end (first step).

Thereafter, the open end of the battery housing 200 may be covered with a cap 300 (second step). In this case, the contact point of the open end of the battery housing 200 and the cap 300 may be joined. For example, the joint between the open end of the battery housing 200 and the cap 300 may be formed by welding. For example, the cap 300 may be coupled to the battery housing 200 using butt welding. Therefore, the battery cell 10 may have a larger internal capacity for the same external dimensions than a battery cell produced using beading and crimping methods. Therefore, the energy density of the battery cell 10 may be increased. However, the battery housing 200 and the cap 300 may be coupled by other methods other than welding, and the coupling method is not limited thereto.

Thereafter, as shown in FIG. 8, an injection hole cap preform 40 may be inserted into the injection hole H1 formed in the cap 300 (third step). The injection hole cap preform 40 may refer to the injection hole cap 400 in the state before it is riveted. The injection hole cap preform 40 may extend in the axial direction to pass through the injection hole H1. A mandrel hole H2' may be formed in the injection hole cap preform 40 so as to extend in the axial direction.

In addition, a step of inserting a gasket preform 50 between the injection hole cap preform 40 and the cap 300 may be performed (fourth step). The gasket preform 50 may refer to the gasket 500 in the state before it is plastically deformed. The gasket preform 50 may have a " 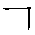 "-shaped cross-section taken along the axial direction. The gasket preform 50 may include a horizontal part 51 positioned on the cap 300, and a vertical part 52 extending in the axial direction and having at least a portion interposed between the injection hole cap preform 40 and the inner surface of the cap 300.

The third and fourth steps may be performed by preferentially inserting the gasket preform 50 and then inserting the injection hole cap preform 40, or by inserting the injection hole cap preform 40 into the gasket preform 50 and then inserting the gasket preform 50.

The injection hole cap preform 40 may include a body preform 41 and a flange preform 42. The body preform 41 may have substantially the same configuration as the body 410 of the injection hole cap 400, and may correspond to the injection hole cap 400 in the state before it is riveted. Specifically, the body preform 41 may be a part that extends in the axial direction to pass through the injection hole H1. The flange preform 42 may have substantially the same configuration and shape as the flange 420 of the injection hole cap 400.

The mandrel hole H2' may extend from the upper surface of the injection hole cap preform 40 in the winding axis direction. The mandrel hole H2' of the injection hole cap preform 40 may have substantially the same configuration as the mandrel hole H2 of the injection hole cap 400, and may correspond to the injection hole cap 400 in the state before it is riveted. The mandrel hole H2' may be formed to penetrate the center of the injection hole cap preform 40. The mandrel hole H2' may penetrate the center of at least a portion of the flange preform 42 and body preform 41 of the injection hole cap preform 40. The mandrel hole H2' may be a hole into or from which a mandrel 60 is inserted or removed. The upper portion of the mandrel hole H2' may be open, and the lower end of the mandrel hole H2' may be closed. The mandrel hole H2' may be closed by the body preform 41.

Referring to FIG. 9, the mandrel hole H2' may be divided into a first region H2'-1 having an inner diameter of a first length r2 and a second region H2'-2 having an inner diameter of a second length r3 greater than the first length. That is, the second region H2'-2 may be concentric with the first region H2'-1 and have an inner diameter greater than or equal to the inner diameter of the first region H2'-1. The second region H2'-2 may be positioned below the first region H2'-1.

The mandrel 60 may be configured to be inserted into the mandrel hole H2'. The mandrel 60 may include a mandrel pin 61, a mandrel head 62 provided at the lower end of the mandrel pin 61, and a weak portion 63 provided between the mandrel pin 61 and the mandrel head 62.

A portion of the mandrel pin 61 may protrude outside the injection hole cap preform 40, and another portion may be positioned within the mandrel hole H2' of the injection hole cap preform 40. A portion of the mandrel pin 61 may be positioned in the first region H2'-1 within the mandrel hole H2. The upper portion of the mandrel pin 61 may be connected to a riveting gun G.

The mandrel head 62 may be configured to extend further outward than the mandrel pin 61 in the radial direction. The mandrel head 62 may be positioned in the second region H2'-2 within the mandrel hole H2'. The diameter d4 of the mandrel head 62 may be greater than the first length r2 and shorter than the second length r3. Therefore, when the mandrel 60 is pulled upward, the mandrel head 62 may be caught by the protruding surface 43 of the injection hole cap preform 40 surrounding the first region H2'-1. In this case, when the force (tension) pulling the mandrel 60 upward exceeds the yield point of the injection hole cap preform 40 material, at least a portion of the injection hole cap preform 40 may be plastically deformed.

The weak portion 63 may be a relatively low-strength portion compared to the mandrel pin 61 and the mandrel head 62, which may fracture when a certain force is applied. For example, the weak portion 63 may have a smaller diameter than the mandrel pin 61. That is, the weak portion 63 may be a portion that is recessed inwardly in the radial direction, relative to the mandrel pin 61.

When the mandrel 60 is pulled upward, a force of a certain level or higher may be applied, so that the mandrel pin 61 and the mandrel head 62 may be separated from the weak portion 63. After at least a portion of the injection hole cap preform 40 is plastically deformed, when a force of a certain level or higher is applied to the mandrel 60, the mandrel 60 may fracture at the weak portion 63. As a result, the mandrel head 62 and the mandrel pin 61 may be separated. In this case, the mandrel head 62 may remain embedded within the injection hole cap preform 40, while the mandrel pin 61 may be removed from the mandrel hole H2.

Thereafter, a step (fifth step) of connecting a riveting gun G to the mandrel 60 inserted into the injection hole cap preform 40 and pulling the riveting gun G upward to seal the injection hole H1 may be performed.

When the riveting gun G connected to the mandrel 60 is pulled upward, the injection hole cap preform 40 may be plastically deformed by tension. Specifically, the axial length W' of the injection hole cap preform 40 may be reduced (referring to FIGS. 6 and 8, it may be reduced from W' to W). In addition, the maximum diameter d1 of the injection hole cap preform 40 may increase beyond the inner diameter of the injection hole H1 (referring to FIGS. 6 and 8, it may increase from d1 to d1').

The body preform 41 of the injection hole cap preform 40 may correspond to the body 410 and plastic deformation portion 430 of the injection hole cap 400. That is, the portion of the body preform 41 of the injection hole cap preform 40, which is plastically deformed by riveting, may be defined as the plastic deformation portion 430.

When the riveting gun G connected to the mandrel 60 is pulled upward, the gasket preform 50 may be plastically deformed by tension. The gasket preform 50 may be plastically deformed in response to the plastic deformation of the injection hole cap preform 40. That is, the gasket preform 50 may also be plastically deformed by the force that plastically deforms the injection hole cap preform 40.

Specifically, when the riveting gun G connected to the mandrel 60 is pulled upward, at least a portion of the vertical part 52 may be bent radially outward. That is, the vertical part 52 of the gasket preform 50 may correspond to the first part 510 and the third part 530 of the gasket 500. In other words, the third part 530 may be the portion of the vertical part 52 of the gasket preform 50 that is plastically deformed.

According to an embodiment, during the process of riveting the injection hole cap preform 40 to the battery housing 200, the injection hole cap 400 may be secured from the outside of the battery housing 200. According to an embodiment of the present disclosure, riveting may be performed outside the battery housing 200. Accordingly, the generation of foreign substances inside the battery housing 200 may be suppressed during the manufacturing of the battery cell 10.

According to an embodiment, the manufacturing method may include, an electrolyte injection step between the second step and the third step, a pre-charge step for partially charging the battery cell 10 to activate it, an activation step for charging the battery cell 10 to a higher voltage, and a degassing step for removing gases generated inside the battery cell 10.

The electrolyte injection step may be a step for injecting the electrolyte into the injection hole H1. By injecting the electrolyte into the battery housing 200, ions (e.g., lithium ions) constituting the electrolyte may smoothly move between the first and second electrodes. However, after the electrolyte injection step, electrolyte may remain around the injection hole H1 (the injection hole periphery 310). Therefore, the remaining electrolyte may be removed using a laser cleaning process or the like.

The pre-charge step, which is an initial charging step, may be typically performed slowly at a low current, which may enhance the stability of the battery cell 10 and reduce the risk of thermal runaway that may occur during subsequent charging and discharging.

The activation step (formation) involves repeatedly charging and discharging the battery cell 10. In this step, by precisely controlling the charge and discharge rates, it is possible to verify whether the battery cell 10 operates normally.

The degassing step may be a step to remove gases remaining within the battery cell 10. If gases generated during the activation step, which involves repeated charging and discharging, remain within the battery cell 10, they may cause problems such as swelling of the battery cell 10 or an increase in internal pressure. Therefore, the battery cell 10 may be vacuumed, or the gases may be discharged using special equipment. When the gas inside the battery cell 10 is removed, the risk of volume expansion, damage, or ignition of the battery cell 10 may be reduced, and the battery cell 10 may stably maintain its lifespan and performance.

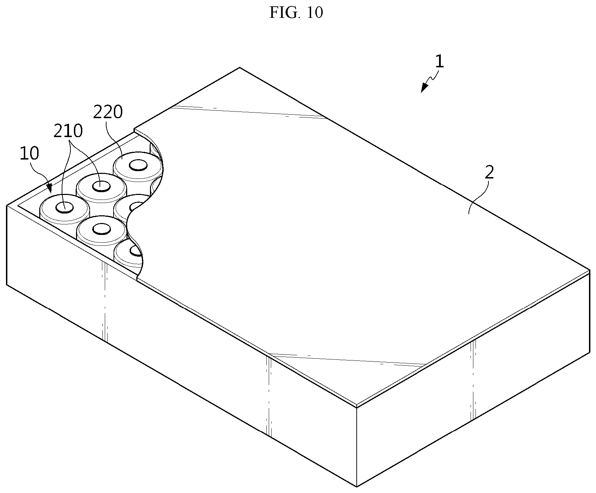

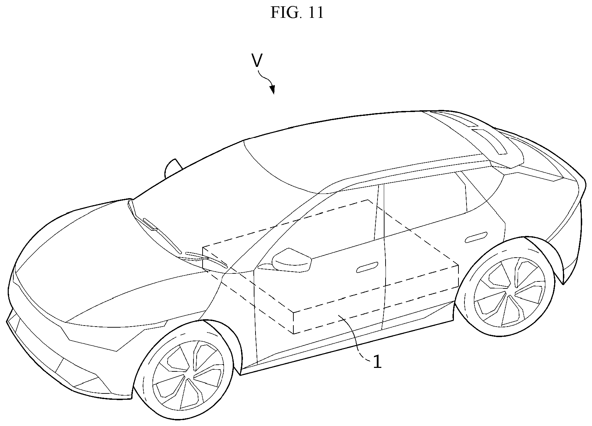

FIG. 10 is a drawing illustrating a battery pack according to an embodiment of the present disclosure. FIG. 11 is a drawing illustrating a vehicle including the battery pack in FIG. 10.

Referring to FIG. 10, a battery pack 1 according to the present disclosure may include at least one battery cell 10 according to the present disclosure described above. In addition, the battery pack 1 according to the present disclosure may include a pack housing 2 capable of accommodating at least one battery cell 10. The battery pack 1 may be configured using a battery module, which is an intermediate assembly form, or, as illustrated, the battery pack 1 may be configured directly without a battery module. Since the battery cell 10 itself has a large volume, there is no particular difficulty in implementing the battery pack 1 even without using an intermediate structure called a battery module.

In addition, the battery pack 1 may further include, in addition to the battery cell 10, various components of the battery pack 1, such as a BMS, a pack case, a relay, a current sensor, and the like, known at the time of filing of the present disclosure.

The battery pack 1 may include a plurality of battery cells 10. The battery cells 10 may be arranged in a predetermined number of rows, and in each battery cell 10, the electrode terminal 220 with the first polarity and the electrode terminal 210 with the second polarity may both be positioned on the upper side. Therefore, when electrically connecting the plurality of battery cells 10, both the positive and negative electrodes may be connected from one direction, thereby simplifying the electrical connection structure. This increases the number of battery cells 10 capable of being mounted in the same space to improve energy density, and facilitates electrical wiring. Therefore, the space efficiency is excellent, and the electrical wiring efficiency is high, thereby significantly improving the assembly process of the electric vehicle, as well as the assembly and maintenance of the battery pack 1. In addition, as described above, the battery cell 10 may have a higher energy density than before. The battery pack 1 with such a higher energy density may store the same amount of energy while reducing its volume and weight.

Therefore, when a battery pack 1 equipped with such battery cells 10 is mounted to a vehicle V that uses electricity as its energy source, as illustrated in FIG. 11, the vehicle's mileage relative to its energy consumption may be further increased.

In addition, since electrical wiring is performed on the bottom of the battery housing 200 and the side where the electrode terminal 210 is positioned, and electrical wires are not provided in the cap 300 on the opposite side, the venting effect may be maximized by controlling the venting to be directed toward the cap. In addition, by positioning a heat sink, a cooling plate, or a tray on the cap side, assembly and cooling may be effectively achieved regardless of the electrical connection points. In addition, by assembling the battery with the vent structure facing downward, gases emitted from the secondary battery may be discharged downward. Since secondary batteries are typically mounted lower than the occupants of vehicles such as EVs, upward emissions of gas from the secondary battery may pose a risk to occupants. The battery cell 10 of the present disclosure may effectively discharge high-pressure gas within the secondary battery, and may be safe because it is independent of the electrical connection points at the top. In addition, when the vent structure ruptures, thus discharging gas downward, occupants may be prevented from harm, thereby significantly enhancing safety.

Referring to FIG. 11, a vehicle V according to the present disclosure may include at least one battery pack 1 according to the present disclosure.

The battery cell 10 according to the present disclosure may be applied to vehicles such as electric vehicles or hybrid vehicles. That is, the vehicle V according to the present disclosure may include the battery cell 10 according to the present disclosure or the battery pack 1 according to the present disclosure. In addition, the vehicle V according to the present disclosure may further include various other components included in the vehicle, in addition to the battery cell 10 or the battery pack 1. For example, the vehicle V according to the present disclosure may further include, in addition to the battery cell 10 according to the present disclosure, a chassis, a motor, a control device such as an electronic control unit (ECU), and the like. The vehicle V includes a four-wheel vehicle and a two-wheel vehicle. The vehicle V may operate by receiving power from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery cell comprising:
an electrode assembly configured by winding a first electrode, a second electrode, and a separator interposed therebetween around a winding axis;
a battery housing configured to accommodate the electrode assembly through an open end formed on one side;
a cap configured to cover the open end and having an injection hole formed in a center;
an injection hole cap configured to be inserted into the injection hole to seal the injection hole; and
a gasket interposed between the injection hole cap and the cap and having at least three sides in contact with an injection hole periphery surrounding the injection hole of the cap.

2. The battery cell of claim 1,
wherein the injection hole cap is configured as a blind rivet.

3. The battery cell of claim 1,
wherein the injection hole cap comprises:
a body inserted into the injection hole;
a flange configured to cover the injection hole at an upper side of the cap and extending outward from an upper end of the body in a radial direction perpendicular to a winding axis direction; and
a plastic deformation portion having at least a portion extending outward from a lower end of the body in the radial direction.

4. The battery cell of claim 3,
wherein a diameter of the flange is greater than an inner diameter of the injection hole.

5. The battery cell of claim 3,
wherein a maximum diameter of the plastic deformation portion is greater than an inner diameter of the injection hole.

6. The battery cell of claim 3,
wherein at least a portion of the plastic deformation portion comprises a horizontal plane substantially parallel to a lower surface of the cap.

7. The battery cell of claim 3,
wherein the injection hole cap has a mandrel hole formed to extend from an upper surface of the injection hole cap in the winding axis direction.

8. The battery cell of claim 1,
wherein the injection hole cap further comprises a mandrel head positioned within the injection hole cap.

9. The battery cell of claim 1,
wherein the injection hole cap comprises a material having elongation.

10. The battery cell of claim 1,
wherein the gasket is configured to seal a gap between the cap and the injection hole cap at upper and lower sides of the cap.

11. The battery cell of claim 1,
wherein the gasket has a shape of a ring surrounding the injection hole periphery.

12. The battery cell of claim 3,
wherein the gasket has a "⊏"-shaped cross-section, based on the winding axis, taken along the winding axis direction.

13. The battery cell of claim 3,
wherein the gasket comprises:
a first part interposed between the body and an inner surface of the cap;
a second part extending vertically from the first part and interposed between the flange and an upper surface of the cap; and
a third part extending vertically from the first part and interposed between the plastic deformation portion and a lower surface of the cap.

14. The battery cell of claim 13,
wherein a diameter of the second part is greater than a diameter of the flange of the injection hole cap.

15. The battery cell of claim 13,
wherein a diameter of the third part is greater than a diameter of the plastic deformation portion of the injection hole cap.

16. A method for manufacturing a battery cell, the method comprising:
a first step of inserting an electrode assembly, configured by winding a first electrode, a second electrode, and a separator interposed therebetween around a winding axis, through an open end of a battery housing;
a second step of covering the open end of the battery housing with a cap;
a third step of inserting an injection hole cap preform into an injection hole formed in the cap;
a fourth step of inserting a gasket preform between the injection hole cap preform and the cap; and
a fifth step of connecting a riveting gun to a mandrel inserted into the injection hole cap preform and pulling the riveting gun upward to seal the injection hole.

17. The method for manufacturing a battery cell of claim 16,
wherein, when the riveting gun is pulled upward, the injection hole cap preform and the gasket preform are plastically deformed.

18. The method for manufacturing a battery cell of claim 16,
wherein a mandrel hole extending in a winding axis direction is formed in the injection hole cap preform, and
wherein the mandrel is configured to be inserted into the mandrel hole.

19. The method for manufacturing a battery cell of claim 18,
wherein the mandrel comprises: a mandrel pin having at least a portion protruding outside the injection hole cap preform; a mandrel head extending from a lower end of the mandrel pin further outward than the mandrel pin in a radial direction; and a weak portion positioned between the mandrel pin and the mandrel head.

20. The method for manufacturing a battery cell of claim 19,
wherein the mandrel hole comprises a first region having an inner diameter of a first length; and a second region positioned below the first region and having an inner diameter of a second length greater than the first length.

21. The method for manufacturing a battery cell of claim 20,
wherein a diameter of the mandrel head is greater than the first length.

22. The method for manufacturing a battery cell of claim 18,
wherein, when the mandrel is pulled upward, a length of the injection hole cap preform in the winding axis direction is reduced, and a maximum diameter of the injection hole cap preform increases beyond an inner diameter of the injection hole.

23. The method for manufacturing a battery cell of claim 18,
wherein the gasket preform has a " 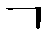 "-shaped cross-section taken along the winding axis direction.

24. The method for manufacturing a battery cell of claim 18,
wherein the gasket preform comprises: a horizontal part positioned on the cap; and a vertical part extending in the winding axis direction and having at least a portion interposed between the injection hole cap preform and an inner surface of the cap.

25. The method for manufacturing a battery cell of claim 24,
wherein, when the mandrel is pulled upward, the vertical part is bent radially outward.

26. The method for manufacturing a battery cell of claim 19,
wherein, when the mandrel is pulled upward, the mandrel pin and the mandrel head are separated from the weak portion when a force of a certain level or higher is applied.

27. The method for manufacturing a battery cell of claim 16, further comprising:
a step of injecting electrolyte through the injection hole between the second step and the third step;
a pre-charge step of partially charging the battery cell to activate it;
an activation step of charging the battery cell to a higher voltage; and
a degassing step of removing gases generated inside the battery cell.

28. A battery pack comprising at least one battery cell according to any one of claims 1 to 15.

29. A vehicle comprising at least one battery cell according to any one of claims 1 to 15.
